(19) **Europäisches Patentamt / European Patent Office / Office européen des brevets**

(11) **EP 2 972 691 B1**

(12) **EUROPEAN PATENT SPECIFICATION**

(45) Date of publication and mention of the grant of the patent:
**19.04.2017 Bulletin 2017/16**

(51) Int Cl.:
*G06F 3/023* (2006.01)      *G06F 17/27* (2006.01)

(21) Application number: **14716112.9**

(22) Date of filing: **11.03.2014**

(86) International application number:
**PCT/US2014/022890**

(87) International publication number:
**WO 2014/159298 (02.10.2014 Gazette 2014/40)**

(54) **LANGUAGE MODEL DICTIONARIES FOR TEXT PREDICTIONS**

SPRACHMODELLWÖRTERBÜCHER FÜR TEXTVORHERSAGEN

DICTIONAIRES DE MODÈLES DE LANGUAGE POUR PRÉDICTION DE TEXTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.03.2013 US 201313830606**

(43) Date of publication of application:
**20.01.2016 Bulletin 2016/03**

(73) Proprietor: **Microsoft Technology Licensing, LLC Redmond, WA 98052 (US)**

(72) Inventors:
• **GRIEVES, Jason A.**
  **Redmond**
  **Washington 98052-6399 (US)**
• **RUDCHENKO, Dmytro**
  **Redmond**
  **Washington 98052-6399 (US)**
• **SUNDARARAJAN, Parthasarathy**
  **Redmond**
  **Washington 98052-6399 (US)**
• **PAEK, Timothy S.**
  **Redmond**
  **Washington 98052-6399 (US)**
• **ALMOG, Itai**
  **Redmond**
  **Washington 98052-6399 (US)**
• **KRIVOSHEEV, Gleb G.**
  **Redmond**
  **Washington 98052-6399 (US)**

(74) Representative: **Trichard, Louis et al**
  **Olswang LLP**
  **90 High Holborn**
  **London WC1V 6XX (GB)**

(56) References cited:
**WO-A1-2010/112841      WO-A1-2012/042217
WO-A1-2012/090027**

**Description**

**BACKGROUND**

Computing devices, such as mobile phones, portable and tablet computers, entertainment devices, handheld navigation devices, and the like are commonly implemented with on-screen keyboards (e.g., soft keyboards) that may be employed for text input and/or other interaction with the computing devices. When a user inputs text characters into a text box or otherwise inputs text using an on-screen keyboard or similar input device, a computing device may apply auto-correction to automatically correct misspellings and/or text prediction to predict and offer candidate words/phrases based on input characters. WO2012/090027A1 describes selection of a language model for use in text prediction and/or correction of user entered text by comparing the determined likelihood of appropriateness for the language models. WO2012/042217A1 describes generating a final set of sequence predictions, each with an associated probability, by combining sequences from different models to get a list of predictions, where the sequences are combined by simply ranking and removing duplicate predictions.

In a traditional approach, auto-corrections and text predictions are produced using static language models that may be developed in testing simulations and hard-coded on a device. Users may be able to explicitly add a word to the model or omit a word, but otherwise the static language model may not adapt to particular users and interaction scenarios. Accordingly, text prediction candidates provided using traditional techniques are often inappropriate or irrelevant for the user and/or scenario, which may lead to frustration and lack of faith in the predictions.

**SUMMARY**

Adaptive language models for text predictions are described herein. In one or more implementations, entry of text characters is detected during interaction with a device. Text prediction candidates corresponding to the detected text characters are generated according to an adaptive language model. The adaptive language model may be configured to include multiple individual language model dictionaries having respective scoring data that is combined together to rank and select prediction candidates in different interaction scenarios. In addition to a pre-defined general population dictionary, the dictionaries may include a personalized dictionary and/or interaction-specific dictionaries that are learned by monitoring a user's typing activity to adapt predictions to the user's style. Combined probabilities for predictions are computed as a weighted combination of individual probabilities from multiple dictionaries of the adaptive language model. In an implementation, dictionaries corresponding to multiple different languages may be combined to produce multi-lingual predictions.

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

**BRIEF DESCRIPTION OF THE DRAWINGS**

The detailed description is described with reference to the accompanying figures. In the figures, the left-most digit(s) of a reference number identifies the figure in which the reference number first appears. The use of the same reference numbers in different instances in the description and the figures may indicate similar or identical items.

FIG. 1 illustrates an example operating environment in which aspects of adaptive language models for text predictions can be implemented.
FIG. 2 illustrates an example user interface in accordance with one or more implementations.
FIG. 3 illustrates an example text prediction scenario in accordance with one or more implementations.
FIG. 4A illustrates an example representation of an adaptive language model in accordance with one or more implementations.
FIG. 4B illustrates a representation of example relationships between language model dictionaries in accordance with one or more implementations.
FIG. 5 depicts an example procedure in which text predictions are provided in accordance with one or more implementations.
FIG. 6 depicts an example procedure in which an interaction-specific dictionary is used for text predictions in accordance with one or more implementations.
FIG. 7 depicts an example procedure in which text prediction candidates are selected using a weighted combination of scoring data from multiple dictionaries in accordance with one or more implementations.
FIG. 8 depicts an example a procedure in which multi-lingual text prediction candidates are generated in accordance with one or more implementations.
FIG. 9 depicts example systems and devices that may be employed in one or more implementations of adaptive language models for text predictions.

**DETAILED DESCRIPTION**

**Overview**

In traditional approaches, text predictions may rely upon static language models developed in testing simulations and hard-coded on a device. As the static language model may not adapt to users' individual style, text prediction candidates generated using traditional techniques are often inappropriate or irrelevant, which may lead to frustration and lack of confidence in the predictions.

Adaptive language models for text predictions are described herein. In one or more implementations, entry of text characters is detected during interaction with a device. Text prediction candidates corresponding to the detected text characters are generated according to an adaptive language model. The adaptive language model may be configured to include multiple individual language model dictionaries having respective scoring data that is combined together to rank and select prediction candidates for different interaction scenarios. In addition to a pre-defined general population dictionary, the dictionaries may include a personalized dictionary and/or interaction-specific dictionaries that are learned by monitoring a user's typing activity to adapt predictions to the user's style. Combined probabilities for predictions are computed as a weighted combination of individual probabilities from multiple dictionaries of the adaptive language model. In an implementation, dictionaries corresponding to multiple different languages may be combined to produce multi-lingual predictions.

In the discussion that follows, a section titled "Operating Environment" describes an example environment and example user interfaces that may be employed in accordance with one or more implementations of adaptive language models for text predictions. Following this, a section titled "Adaptive Language Model Details" describes example adaptive language model details and procedures in accordance with one or more implementations. Last, a section titled "Example System" is provided that describes example systems and devices that may be employed for one or more implementations of adaptive language models for text predictions.

**Operating Environment**

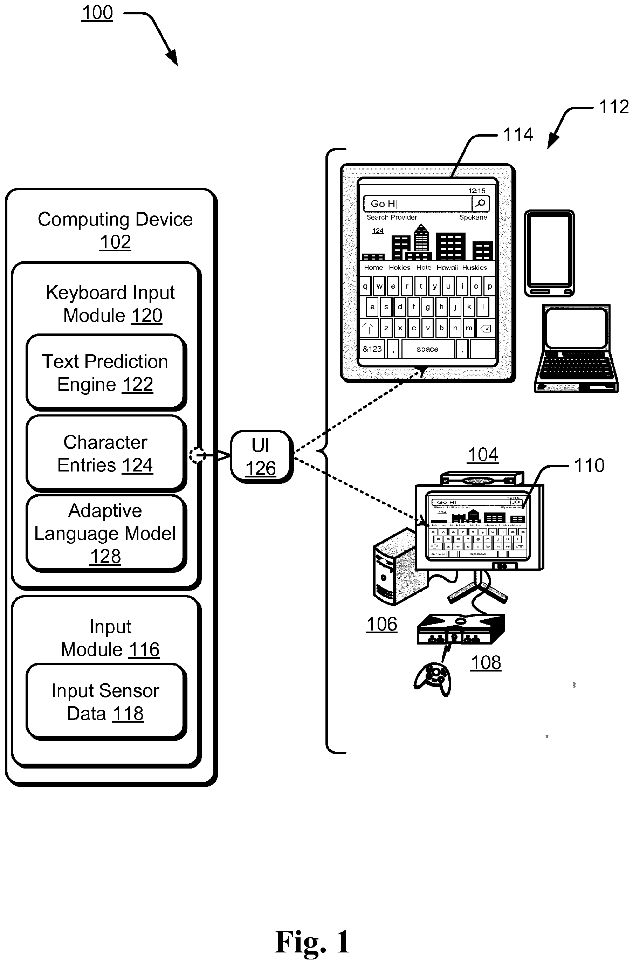

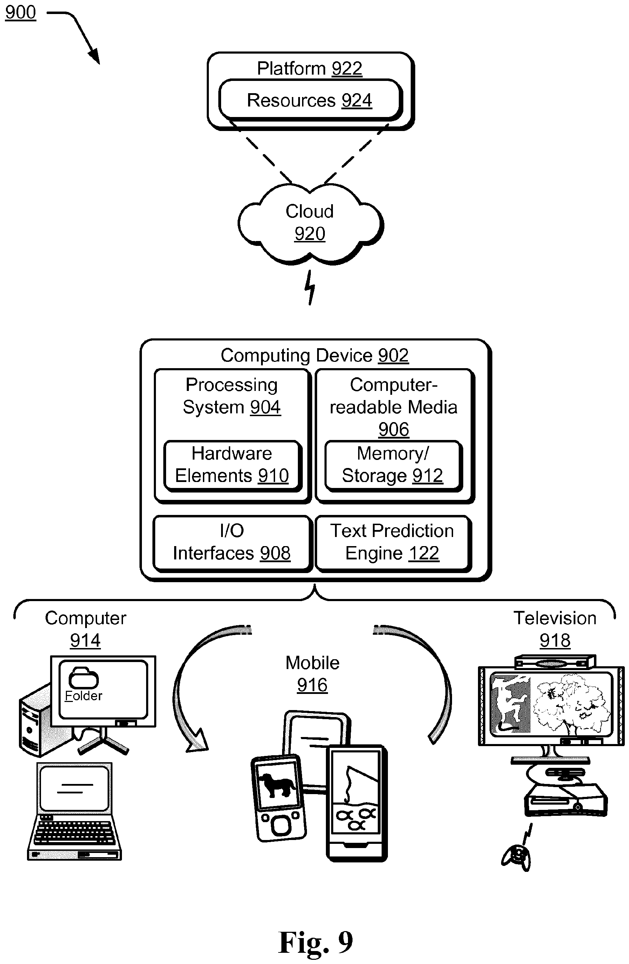

Fig. 1 illustrates an example system 100 in which embodiments of adaptive language models for text predictions can be implemented. The example system 100 includes a computing device 102, which may be any one or combination of a fixed or mobile device, in any form of a consumer, computer, portable, communication, navigation, media playback, entertainment, gaming, tablet, and/or electronic device. For example, the computing device 102 can be implemented as a television client device 104, a computer 106, and/or a gaming system 108 that is connected to a display device 110 to display media content. Alternatively, the computing device may be any type of portable computer, mobile phone, or portable device 112 that includes an integrated display 114. Any of the computing devices can be implemented with various components, such as one or more processors and memory devices, as well as with any combination of differing components as further described with reference to the example device shown in Fig. 9.

The integrated display 114 of a computing device 102, or the display device 110, may be a touch-screen display that is implemented to sense touch and gesture inputs, such as a user-initiated character, key, typed, or selector input in a user interface that is displayed on the touch-screen display. Alternatively or in addition, the examples of computing devices may include other various input mechanisms and devices, such as a keyboard, mouse, on-screen keyboard, remote control device, game controller, or any other type of user-initiated and/or user-selectable input device.

In implementations, the computing device 102 may include an input module 116 that detects and/or recognizes input sensor data 118 related to various different kinds of inputs such as on-screen keyboard character inputs, touch input and gestures, camera-based gestures, controller inputs, and other user-selected inputs. The input module 116 is representative of functionality to identify touch input and/or gestures and cause operations to be performed that correspond to the touch input and/or gestures. The input module 116, for instance, may be configured to recognize a gesture detected through interaction with a touch-screen display (e.g., using touch-screen functionality) by a user's hand. In addition or alternatively, the input module 116 may be configured to recognize a gesture detected by a camera, such as waving of the user's hand, a grasping gesture, an arm position, or other defined gesture. Thus, touch inputs, gestures, and other input may also be recognized through input sensor data 118 as including attributes (e.g., movement, selection point, positions, velocity, orientation, and so on) that are usable to differentiate between different inputs recognized by the input module 116. This differentiation may then serve as a basis to identify a gesture from the inputs and consequently an operation that is to be performed based on identification of the gesture.

The computing device includes a keyboard input module 120 that can be implemented as computer-executable instructions, such as a software application or module that is executed by one or more processors to implement the various embodiments described herein. The keyboard input module 120 represents functionality to provide and manage an on-screen keyboard for keyboard interactions with the computing device 102. The keyboard input module 120 may be configured to cause representations of an on-screen keyboard to be selectively presented at different times, such as when a text input box, search control, or other text input control is activated. An on-screen keyboard may be provided for display on an external display, such as the display device 110 or on an integrated display such as the integrated display 114. In addition, note that a hardware keyboard/input device may also implement an adaptable "on-screen" keyboard having at least some soft keys suitable for the techniques described herein. For instance, a hardware keyboard provided as an external device or integrated with the computing device 102 may incorporate a display device, touch keys, and/or a touchscreen that may be employed to display a text prediction key as described herein. In this case, the keyboard input module 120 may be provided as a component of a device driver for the hardware keyboard/input device.

The keyboard input module 120 may include or otherwise make use of a text prediction engine 122 that represents functionality to process and interpret character entries 124 to form and offer predictions of candidate words corresponding to the character entries 124. For example, an on-screen keyboard may be selectively exposed in different interaction scenarios for input of text in a text entry box, password entry box, search control, data form, message thread, or other text input controls of a user interface 126, such as a form, HTML page, application UI, or document to facilitate user input of character entries 124 (e.g., letters, numbers, and/or other alphanumeric characters).

In general, the text prediction engine 122 ascertains one or more possible candidates that most closely match character entries 124 that are input. In this way, the text prediction engine 122 can facilitate text entry by providing one or more predictive words that are ascertained in response to character entries 124 that are input by a user. For example, the words predicted by the text prediction engine 122 may be employed to perform auto-correction of input text, present one or more words as candidates for selection by a user to complete, modify, or correct input text, automatically change touch hit areas for keys of the on-screen keyboard that correspond to predicted words, and so forth.

In accordance with techniques described herein, the text prediction engine 122 may be configured to include or make use of an adaptive language model 128 as described above and below. Generally, the adaptive language model 128 is representative of functionality to adapt predictions made by the text prediction engine 122 on an individual basis to conform to different ways in which different users type. Accordingly, the adaptive language model 128 may monitor and collect data regarding text entries made by a user of a device. The monitoring and data collection may occur across the device in different interaction scenarios that may involve different applications, people (e.g., contacts or targets), text input mechanisms, and other contextual factors for the interaction. In one approach, the adaptive language model 128 is designed to make use of multiple language model dictionaries as sources of words and corresponding scoring data (e.g., conditional probabilities, word counts, n-gram models, and so forth) that may be used to predict a next word or intended word based on a text entry. Word probabilities and/or other scoring data from multiple dictionaries may be combined in various ways to rank possible candidate words one to another and select at least some of the candidates as being the most likely predictions for a given text entry. As described in greater detail below, the multiple dictionaries applied for a given interaction scenario may be selected from a general population dictionary, a personalized dictionary, and/or one or more interaction-specific dictionaries made available by the adaptive language model 128. Details regarding these and other aspects of adaptive language models for text predictions may be found in relation to the following figures.

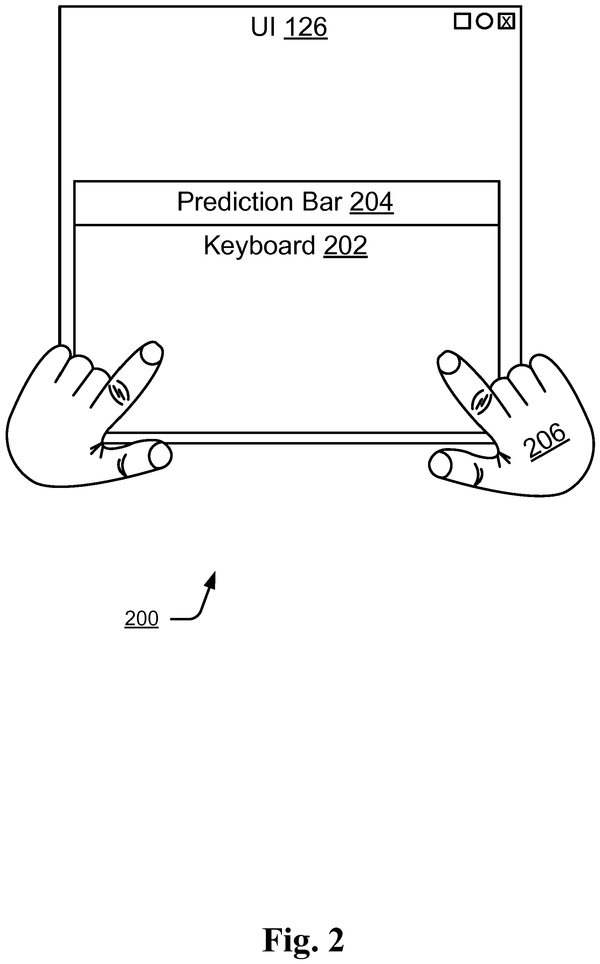

Fig. 2 illustrates a text prediction example in accordance with one or more embodiments, generally at 200. The depicted example can be implemented by the computing device 102 and the various components described with reference to Fig. 1. In particular, Fig. 2 depicts an example user interface 126 that may be output to facilitate interaction with a computing device 102. The user interface 126 is representative of any suitable interface that may be provided for the computing device, such as by an operating system or other application program. As depicted, the user interface 126 may include or otherwise be configured to make use of a keyboard 202. In this example, the keyboard 202 is an on-screen keyboard that may be rendered and/or output for display on a suitable display device. In some cases, the keyboard 202 may be incorporated as part of an application and appear within a corresponding user interface 126 to facilitate text entry, navigation, and other interaction with the application. In addition or alternatively, a representation of a keyboard 202 may be selectively exposed by a keyboard input module within a user interface 126 when text entry is appropriate. For example, the keyboard 202 may selectively appear when a user activates a text input control such as a search control, data form, or text input box. As mentioned, a suitably configured hardware keyboard may also be employed to provide input that causes text predictions to be determined and used to facilitate further text input.

In at least some embodiments, a keyboard input module 120 may cause representations of one or more suitable text prediction candidates available from the text prediction engine 122 to be presented via the user interface. For example, a text prediction bar 204 or other suitable user interface control or instrumentality may be configured to present the representations of one or more suitable text prediction candidates. For instance, representations of predicted text, words, or phrases may be displayed using an appropriate user interface instrumentality, such as the illustrated prediction bar 204, a dropdown box, a slide-out element, a pop-up box, toast message window, or a list box to name a few examples. The text prediction candidates may be provided as selectable elements (e.g., keys, button, hit areas) that when selected cause input of corresponding text. The user may interact with the selectable elements to select one of the displayed candidates by way of touch input from a user's hand 206, or otherwise. In addition or alternatively, text prediction candidates derived by a text prediction engine 122 may be used for auto-correction of input text, to expand underlying hit areas for one or more keys of the keyboard 202, or otherwise using predicted text to facilitate text entry.

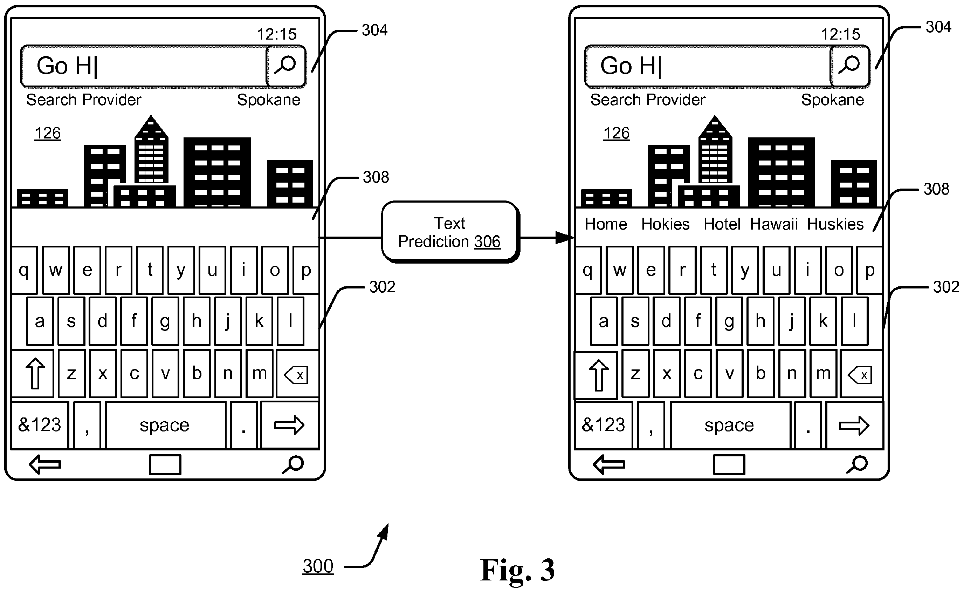

FIG. 3 illustrates presentation of a text prediction in accordance with an example interaction scenario, generally at 300. In particular, a user interface 126 configured for interaction with a search provider is depicted having an on-screen keyboard 302 for a mobile phone device. The interface includes a text input control 304 in the form of a search input box. In the depicted example, a user has interacted with the text input control to input the text characters "Go H" that correspond to a partial phrase. In response to input of this text, the text prediction engine 122 may operate to determine one or more prediction candidates. When this text prediction 306 occurs, the keyboard input module 120 may detect that one or more prediction candidates are available and present the candidates via the user interface 126 or otherwise make use of the prediction candidates.

By way of example and not limitation, Fig. 3 depicts various text prediction options for the input text "Go H" as being output in a text prediction bar 308 that appears at the top of the keyboard. In particular, the options "Home," "Hokies," "Hotel," "Hawaii," and "Huskies" are shown as possible completions of the input text. In this scenario, the options may be configured as selectable elements of the user interface operable to cause insertion of a corresponding prediction candidates presented via the text prediction bar 308. Thus, if a user selects the "Hokies" option by touch or otherwise, the input text "Go H" in the search input box may automatically be completed to "Go Hokies" in accordance with the selected option.

Having considered an example environment, consider now a discussion of some adaptive language model examples to further illustrate various aspects.

**Adaptive Language Model Details**

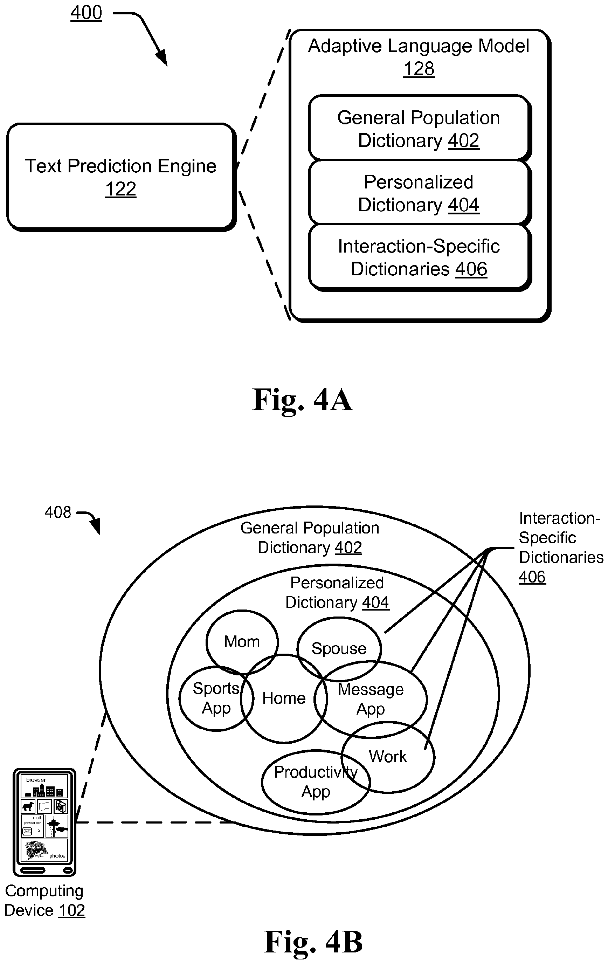

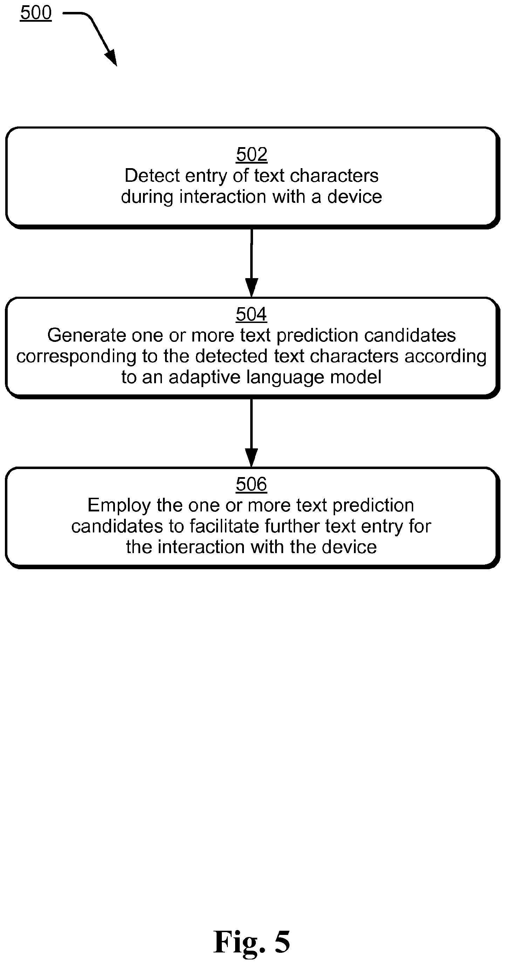

This section discusses details of techniques that employ adaptive language models for text predictions with reference to the example representations of Figs. 4A and 4B and the example procedures of Figs. 5-8. In portions of the following discussion reference may be made to the example operating environment of Fig. 1 in which various aspects may be implemented. Aspects of each of the procedures described below may be implemented in hardware, firmware, or software, or a combination thereof. The procedures are shown as a set of blocks that specify operations performed by one or more devices and are not necessarily limited to the orders shown for performing the operations by the respective blocks. In at least some implementation the procedures may be performed by a suitably configured computing device, such as the example computing device 102 of Fig. 1 that includes or makes use of a text prediction engine 122 or comparable functionality.

Fig. 4A depicts generally at 400 a representation of an adaptive language model in accordance with one or more implementations. As shown, the adaptive language model 128 may include or make use of multiple individual language model dictionaries that are relied upon to make text predictions. In particular, the adaptive language model 128 in Fig. 4A is illustrated as incorporating a general population dictionary 402, a personalized dictionary 404, and interaction-specific dictionaries 406. The adaptive language model 128 may be implemented by a text prediction engine 122 to adapt text predictions to individual users and interactions. To do so, the adaptive language model 128 may be configured to monitor how users type, learn characteristics of a user's typing as the user types dynamically "on the fly", generate conditional probabilities based on input text characters using the multiple dictionaries, and so forth.

In particular, the adaptive language model may be configured to learn user-specific typing style based upon one or more types of user-feedback detected in connection with text entries performed by the user. The user-feedback may refer to passive or explicit actions that determine what text entries to process and add to the user's personalized dictionaries. For example, the system may process and parse text entries for adaptation when focus on a text input box, edit control, or other UI element is lost. In other words, the system may wait for completion of a text entry or a commitment to the text by the user before learning terms. The user may also commit to text by explicit selections such as a send action to send a message, a post action to post a status update or picture, switching applications, a gesture, a save action, or some other form of commitment to text that is entered. An explicit correction of a word or selection to add to the user's lexicon may also be interpreted as user-feedback that is employed to determine when and how to adapt the user's personalized dictionaries. Similarly, if a user has selected a prediction candidate through a prediction bar or "on-demand" offering for a word, the selected word may be added and/or word probabilities may be weighted in part based upon the number of times the words are selected. Still further, user preferences for font types, capitalization, emoticons, text effects, and other characteristics of text input may be learned in addition to learning vocabulary. Naturally, combinations of different types of user-feedback including but not limited to the forgoing examples may also be employed to drive the way in which the system learns user's style and habits.

The language model dictionaries are generally configured to associate words with probabilities and/or other suitable scoring data (e.g., conditional probabilities, scores, word counts, n-gram model data, frequency data, and so forth) that may be used to rank possible candidate words one to another and select at least some of the candidates as being the most likely predictions for a given text entry. The adaptive language model 128 may track typing activity on user and/or interaction-specific bases to create and maintain corresponding dictionaries. Words and phrases contained in the dictionaries may also be associated with various usage parameters indicative of the particular interaction scenarios (e.g., context) in which the words and phrases collected by the system are used. The usage parameters may be used to define different interaction scenarios, and filter or otherwise organize data to produce various corresponding language model dictionaries. Different combinations of one or more of the individual dictionaries may then be applied to different interaction scenarios accordingly.

Fig. 4B depicts generally at 408 a representation of example relationships between language model dictionaries in accordance with one or more implementations. In this example, the general population dictionary 402 represents a dictionary applicable to a general population that may be pre-defined and loaded on a computing device 102. The general population dictionary 402 reflects probabilities and/or scoring data for word usage based on collective typing activities of many users. In an implementation, the general population dictionary 402 is built by a developer using large amounts of historical training data regarding users' typing and may be pre-loaded onto a device. The general population dictionary 402 is configured to be employed as a word source for predictions across users and devices. In other words, the general population dictionary 402 may represent common usage for the population or community of users as a whole and is not tailored to particular individuals. The general population dictionary 402 may represent an entire collection of "known" words for a selected language, e.g., common usage for English language users.

The personalized dictionary 404 is derived based upon an individual's actual usage. The personalized dictionary 404 reflects words the user types through interaction with a device that the adaptive language model 128 is configured to learn and track. Existing words in the general population dictionary may be assigned to the personalized dictionary as part of the user's lexicon. Words that are not already contained in the general population dictionary may be automatically added as new words in the personalized dictionary 404. The personalized dictionary may therefore encompass a subset of the general population dictionary 402 as represented in Fig. 4B. The personalized dictionary 404 may represent conditional usage probabilities that are tailored to each individual based on the words and phrases the individuals actually use (e.g., user-specific usage).

The interaction-specific dictionaries 406 represent interaction-specific usage of words for corresponding interaction scenarios. For instance, the words a person uses and the way in which they type changes in different circumstances. As mentioned, usage parameters may be used to define different interaction scenarios and to distinguish between the different interaction scenarios. Moreover, the adaptive language model 128 may be configured to maintain and manage corresponding interaction-specific language model dictionaries for multiple interaction scenarios. The interaction-specific dictionaries 406 may each represent a subset of the personalized dictionary 404 as represented in Fig. 4B having words, phrases, and scoring data corresponding to a respective context for interaction with a computing device.

In particular, a variety of interaction scenarios may be defined using corresponding usage parameters that may be associated with a user's typing activity. For instance, usage parameters associated with words/phrases entered during an interaction may indicate one or more characteristics of the interaction, including but not limited to an application identity, a type of application, a person (e.g., a contact name or target recipient ID), a time of day, a date, a geographic location or place, a time of year or season, a setting, a person's age, favorite items, purchase history, relevant topics associated with input text, and/or a particular language used, to name a few examples. Interaction-specific dictionaries 406 may be formed that correspond to one or more of these example usage parameters as well as other usage parameters that describe the context of an interaction.

By way of example and not limitation, Fig. 4B represents example interaction-specific dictionaries that correspond to particular applications (message, productivity, and sports apps), particular locations (home, work), and particular people (mom, spouse). The way in which a user communicates may change for each of these different scenarios and the adaptive language model 128 keeps track of the differences for different interactions to adapt predictions accordingly. Some overlap between the example dictionaries in Fig. 4B is also represented as users may employ some of the same words and phrases across different settings. Additional details regarding these and other aspects of adaptive language model techniques are discussed in relation to the following example procedures.

FIG. 5 depicts a procedure 500 in which text predictions are provided in accordance with one or more implementations. Entry of text characters is detected during interaction with a device (block 502). For example, text may be input by way of an on-screen keyboard, a hardware keyboard, voice commands, or other input mechanism. A mobile phone or other computing device 102 may be configured to detect and process input to represent entered text within a user interface output via the device.

One or more text prediction candidates corresponding to the detected text characters are generated according to an adaptive language model (block 504) and the one or more text prediction candidates are employed to facilitate further text entry for the interaction with the device (block 506). The predictions may be generated in any suitable way using various different techniques described above and below. For instance, a computing device may include a text prediction engine 122 that is configured to implement an adaptive language model 128 as described herein.

In operation, the adaptive language model 128 may be applied to particular text characters to determine corresponding predictions by using and/or combining one or more individual dictionaries. The adaptive language model 128 establishes a hierarchy of language model dictionaries at different levels of specificity (e.g., general population, user, interaction) that may be applied at different times and in different scenarios, such as the example dictionaries represented and described in relation to Fig. 4B.

The hierarchy of language model dictionaries as shown in Fig. 4B may be established for each individual user over time by monitoring and analyzing words that the user types and the context in which different words and styles are employed by the user. Initially, a device may be supplied with a general population dictionary 402 that is relied upon for text predictions before sufficient data regarding a user's individual style is collected. As a user begins to interact with a device in various ways, the text prediction engine 122 begins to learn the user's individual style. Accordingly, a personalized dictionary 404 may be built that reflects the user's actual usage and style. Further, usage parameters associated with the data regarding the user's individual style may be used to produce one or more interaction-specific dictionaries 406 that relate to particular interaction scenarios defined by the usage parameters. As more and more data regarding a user's individual style becomes available, the hierarchy of language model dictionaries may become increasingly more specific and tailored to the user's style. One or more of the dictionaries in the hierarchy of language model dictionaries may be applied to produce text predictions for subsequent interactions with a device.

In order to derive predictions, the adaptive language model 128 is configured to selectively use different combinations of dictionaries in the hierarchy for different interaction scenarios to identify candidates based on input text and to rank the candidates one to another. Generally, scores or values for ranking candidates may be computed by mathematically combining contributions from dictionaries associated with a given interaction scenario in a designated manner. Contributions from multiple dictionaries may be combined in various ways. In one or more embodiments, the adaptive language model 128 is configured to use a ranking or scoring algorithm that computes a weighted combination of scoring data associated with words contained in the multiple dictionaries. Further examples and details of techniques to generate and use prediction candidates are described below.

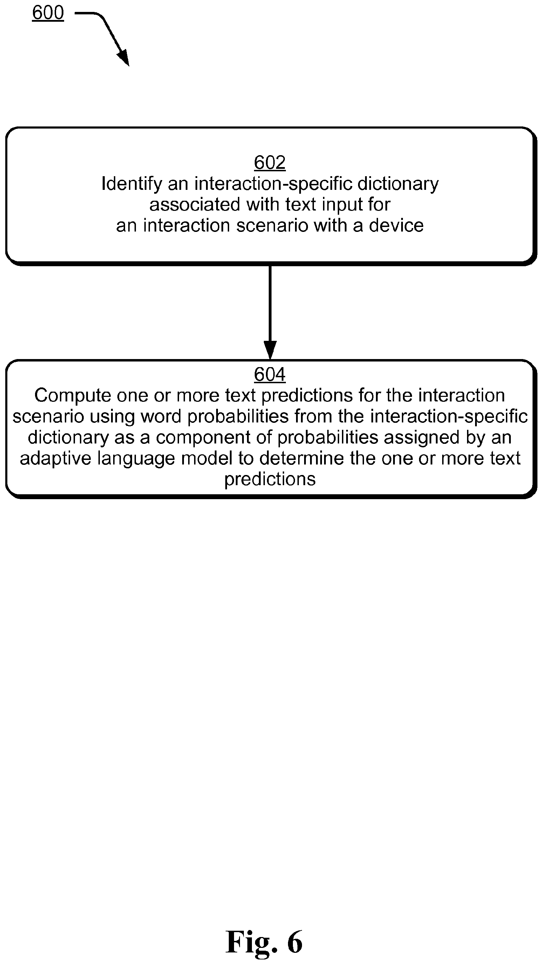

FIG. 6 depicts a procedure 600 in which an interaction-specific dictionary is used for text predictions in accordance with one or more implementations. An interaction-specific dictionary associated with text input for an interaction scenario with a device is identified (block 602). This may occur in any suitable way. In one approach, interaction scenarios are defined according to usage parameters as described previously. The text prediction engine 122 may be configured to recognize a current interaction as matching a defined interaction scenario based upon usage parameters. To do so, the text prediction engine 122 may collect or otherwise obtain contextual information regarding a current interaction by querying applications, interacting with an operating system, parsing message content or document content, examining metadata, and so forth. The text prediction engine 122 may establish one or more usage parameters for the interaction based upon the collected information. Then, the text prediction engine 122 may invoke the adaptive language model 128 to identify an appropriate interaction-specific dictionary to use for the interaction scenario that matches the established usage parameters.

The interaction-specific dictionary that is identified may be applied individually or in combination with one or more other dictionaries to produce text predictions. In particular, one or more text predictions are computed for the interaction scenario using word probabilities from the interaction-specific dictionary as a component of probabilities assigned by an adaptive language model to determine the one or more text predictions (block 604). For example, the language model dictionaries may contain scoring data that is indicative of conditional probabilities for word usage. The conditional probabilities may be based on an n-gram word model that computes probabilities for a number of words "n" in a sequence that may be employed for predictions. For instance, a tri-gram (n=3) or bi-gram (n=2) word model may be implemented, although models having higher orders are also contemplated.

In one approach, the conditional probabilities from the interaction-specific dictionary are used as one component that contributes to scores used to rank prediction candidates. In this example, the scores may be configured as combined probabilities that are based at least in part upon the interaction-specific dictionary. In an implementation, conditional probabilities from the general population dictionary are employed as another component that contributes to the scores. In addition or alternatively, conditional probabilities from the personalized dictionary may be employed as a component that contributes to the scores. More generally, scores may reflect a combination of probabilities and/or other suitable scoring data from any two or more of the individual dictionaries provided by the adaptive language model 128, including combinations that involve multiple interaction-specific dictionaries.

As mentioned, various different interaction scenarios and corresponding interaction-specific dictionaries are contemplated. Each interaction scenario may be related to one or more usage parameters that indicate contextual characteristics of the interaction. The interaction scenarios are generally defined according to contextual characteristics for which a user's typing style and behavior may change. A notion underlying the adaptive language model techniques described herein is that users type different words and typing style changes in different scenarios. To further illustrate this concept, a few examples are described just below.

A user may type differently based upon the application or type of application being used. Accordingly, interaction scenarios may be defined on a per application basis and corresponding dictionaries may be established for individual applications. For instance, different dictionaries that reflect different styles, words, and terms employed by a user of a device may be associated with a text messaging application, a browser, a social networking application, a word processor, a phone application, and a web content application, to name a few examples. Accordingly, different text predictions may be generated depending upon the current application. For example, input of "lo" in a text messaging application may generate "lol," whereas for a word processor "loud" may be predicted based on the different dictionaries that are applied. To enable application-specific dictionaries, the text prediction engine 122 may be configured to collect typing activity on a per application basis using application identifiers, names, or other distinguishing parameters.

In addition or alternatively, application type data may be used to track activity and produce dictionaries that correspond to categories of applications. In this case, a particular dictionary may be applied to a group of applications associated with a corresponding application type. Although typing style may change for different applications, a user's typing behavior and characteristics may be similar when using applications of the same type, such as for two different social networking applications or browsers from different providers. Grouping of applications by type for text predictions takes advantage of typing style similarities that may exist for similar applications. Some example application types that may be used to establish dictionaries based on application type include but are not limited to productivity, business, messaging, social networking, chat, games, web content, media, and so forth.

Interaction scenarios may also be defined on a per person basis and corresponding person-specific dictionaries may be established for individual people with which a user interacts. In one approach, a user's contact information may be leveraged to recognize interactions with particular people and to associate typing activity with individual contacts indicated by the contact information. The text prediction engine 122 may be configured to parse address fields, message content, metadata, or other suitable data to recognize contacts associated with an interaction. When a contact or target person for an interaction is recognized, a corresponding person-specific dictionary may be discovered and applied to make text predictions for the interaction. The person-specific dictionary corresponding to a contact may be employed across the device for different interactions in which the contact is recognized. In this way, a person-specific dictionary may be established for one or more of the user's contacts. In addition or alternatively, contact groups or categories associated with a user's contacts may be used to establish dictionaries based on groups of people. For example, a user's contacts may be grouped in or otherwise associated with categories such as Family, Friends, Work, Book Club, and Soccer Team, to name a few examples. These groupings of people with which a user interacts may be leveraged to form contact group specific dictionaries that may be employed for text predictions in the manner described herein. The contacts groups may correspond to any suitable contacts associated with a user and/or device. This may include for example, contacts and groups associated with a web-based service and/or user account with a provider (e.g., social network service, messaging service, etc.), local address books and contacts for a device, mobile phone contacts, application specific contacts and groups, and/or combinations thereof.

Location specific dictionaries are also contemplated. For example, location data available for a device may also be associated with typing activity and used to establish dictionaries that correspond to particular locations. The locations may correspond to geographic locations (e.g., city, state, country) and/or settings such as work, home, or school. A computing device may be configured to determine its location and provide data indicative of location information to applications in various ways. For example, a device location may be determined via a GPS associated with the device, through cellular or Wi-Fi triangulation, by decoding of location beacons from network components, based on an internet protocol address, or otherwise. In one approach, a user may assign setting names (e.g., work, home, or school) to one or more locations to facilitate location based services. A prompt to assign setting names may be presented for locations that are frequently detected and/or in which the device/user spends a significant amount of time. Location specific dictionaries may be created for location settings that are designated by a user or detected automatically. Location specific dictionaries may also be created for known locations such as cities, states, and so forth.

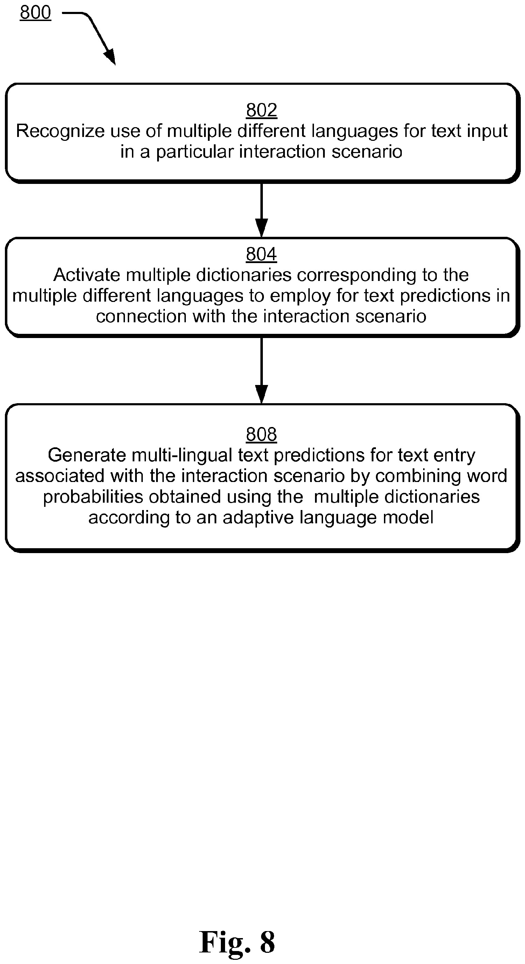

Additional examples of interaction-specific dictionaries include topic-based dictionaries established according to topic keywords (e.g., Super-Bowl, Hawaii, March Madness, etc.) that may be recognized in different interactions. Various timing-based dictionaries are also contemplated. The timing-based dictionaries may include but are not limited to dictionaries that are established according to time of day (day/night), time of year (spring/summer, fall, winter), month, holiday seasons, and so forth. Multiple language specific dictionaries (e.g., English, Spanish, Japanese, etc.) may also be employed to produce multi-lingual text predictions. Details regarding multi-lingual text predictions techniques are discussed below in relation to Fig. 8.

Note that some interaction-specific dictionaries may correspond to combinations of the interaction scenario examples just described. By way of example, dictionaries may be established for combinations of applications and people such as for mom and messaging, mom and email, brother and email, and coworker and email. A variety of other combinations may be employed such as people with location, application with timing, application with location, application with people and location, and so on.

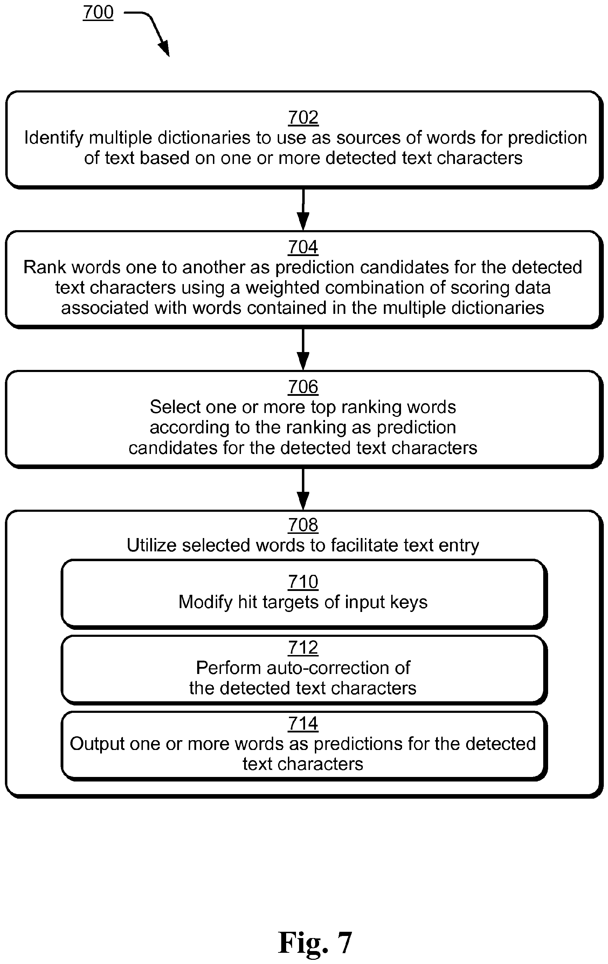

FIG. 7 depicts a procedure 700 in which text prediction candidates are selected using a weighted combination of scoring data from multiple dictionaries in accordance with one or more implementations. Multiple dictionaries are identified to use as sources of words for prediction of text based on one or more detected text characters (block 702). For example, dictionaries to apply for a given interaction may be selected according to an adaptive language model 128 as previously described. For instance, the text prediction engine 122 may identify dictionaries according to one or more usage parameters that match detected text characters. If available, user-specific and/or interaction specific dictionaries may be identified and used by the text prediction engine 122 as components in generating text predictions. If not, then the text prediction engine 122 may default to using the general population dictionary 402 by itself.

Words are ranked one to another as prediction candidates for the detected text characters using a weighted combination of scoring data associated with words contained in the multiple dictionaries (block 704). One or more top ranking words are selected according to the ranking as prediction candidates for the detected text characters (Block 706). The ranking and selection of candidates may occur in various ways. Generally, scores for ranking prediction candidates may be computed by combining contributions from multiple dictionaries. For example, the text prediction engine 122 and adaptive language model 128 may be configured to implement a ranking or scoring algorithm that computes a weighted combination of scoring data. The weighted combination may be designed to interpolate predictions from a general population dictionary and at least one other dictionary. The other dictionary may be a personalized dictionary, an interaction-specific dictionary, or even another general population dictionary for a different language.

As mentioned, language model dictionaries contain words associated with probabilities and/or other suitable scoring data for text predictions. A list of relevant text prediction candidates may be generated from multiple dictionaries by interpolation of individual scores or probabilities derived from the multiple dictionaries for words identified as potential prediction candidates for the detected text characters. Thus, a combined or adapted score may be computed as a weighted average of the individual score components for two or more language model dictionaries. The combined scores may be used to rank candidates one to another. A designated number of top candidates may then be selected according to the ranking. For example, a list of the top ranking five or ten candidates may be generated to use for presentation of text prediction candidates to a user. For auto-corrections, a most likely candidate that has the highest score may be selected and applied to perform an auto-correction.

Generally, interpolation of language model dictionaries as described herein may be represented by the following formula:

$$S_c = W_1 S_1 + W_2 S_2 \ldots W_n S_n$$

where $S_c$ is the combined score computed by summing scores $S_1$, $S_2$, ... $S_n$ from each individual dictionary that are weighted by respective interpolation weights $W_1$, $W_2$,... $W_n$. The general formula above may be applied to interpolate from two or more dictionaries using various kinds of scoring data. By way of example and not limitation, the scoring data may include one or more of probabilities, word counts, frequencies, and so forth. Individual components may be derived from the respective dictionaries. Pre-defined or dynamically generated weights may be assigned to the individual components. Then, the combined score is computed by summing the individual components weighted according to the assigned weights, respectively.

In an implementation, a linear interpolation may be employed to combine probabilities from two dictionaries. The interpolation of probabilities from two sources may be represented by the following formula:

$$P_c = W_1 P_1 + W_2 P_2$$

where $P_c$ is the combined probability computed by summing probabilities $P_1$ $P_2$ from each individual dictionary that are weighted by respective interpolation weights $W_1$, $W_2$. The linear interpolation approach may also be extended to more than two sources according to the general formula above.

The interpolation weights assigned to the components of the formula may be computed in various ways. For example, weights may be determined empirically and assigned as individual weight parameters for the scoring algorithm. In some implementations, the weight parameters may be configurable by a user to change the influence of different dictionaries, selectively turn the adaptive language model on/off, or otherwise tune the computation.

In at least some implementations, the interpolation weights may be dependent upon on another. For example, $W_2$ may set to $1-W_1$, where $W_1$ is between 0 and 1. For the above example, this results in the following formula:

$$P_c = W_1 P_1 + (1-W_1) P_2$$

In addition or alternatively, weight parameters may be configured to adjust dynamically according to an interpolation function. The interpolation function is designed to adjust the weights automatically in order to change to the relative contributions of different components of the scores based upon one or more weighting factors. In the foregoing equation, this may occur by dynamically setting the value of $W_1$, which changes the

weights associated with both $P_1$ and $P_2$.

By way of example, the interpolation function may be configured to account for factors such as the amount of user data available overall (e.g., total word count), the count or frequency of individual words, how recently the words are used, and so forth. Generally, the weights may adapt to increase the influence of the individual user's lexicon as more data is collected for the user and also increase the influence of individual words that are used more often. Additionally, weights for words that are used more recently may be adjusted to increase the influence of the recent words. The interpolation function may employ word counts and timing data associated with a user's typing activity collectively across the device and/or for particular interaction scenarios to adjust weights accordingly. Thus, different weights may be employed depending upon the interaction scenario and corresponding dictionaries that are selected.

Accordingly, weights may vary based upon one or more of total word count or other measure of the amount of user data collected, individual word count for a candidate word, and/or how recently a candidate word was used. In approach, the interpolation function may be configured to adapt the value of $W_1$ between a minimum value and maximum value, such as 0 and 0.5. The value may vary between the minimum and maximum according to a selected linear equation having a given slope.

The interpolation function may also set a threshold value for individual word counts. Below the threshold the value of $W_1$ may be set to zero. This forces a minimum number of instances (e.g., 2, 3, 10, etc.) of a word to occur before the word is considered for text predictions. Using the threshold may prevent misspelled and mistaken words from being immediately used as part of the user specific lexicon.

To account for recency, the value of $W_1$ may be adjusted by a multiplier that depends upon how recently a word was used. The value of the multiplier may be based on the most recent occurrence of a word or a rolling average value for a designated number of most recent occurrences (e.g., last 10 or last 5). By way of example, a multiplier may be based upon how many days or months ago a particular word was last used. The multiplier may increase the contribution of probability/score for words that have been entered more recently. For example, a multiplier of 1.2 may be applied to words used in the preceding month and this value may decrease for each additional month down to a value of 1 for words last used a year or more ago. Naturally, a variety of other values and time frames may be employed to implement a scheme that accounts for recency. Other techniques to account for recency may also be employed including but not limited to adding a recency based factor into the interpolation equation, discounting the weights assigned to words according to a decay function as the time of last occurrence becomes longer, and so forth.

A mechanism to remove stale words after a designated period of time may also be implemented. This may be accomplished in various ways. In one approach, a periodic cleanup operation may identify words that have not been used for a designated time frame, such as one year or eighteen months. The identified words may be removed from the user's custom lexicon. Another approach is to set weights for the words to zero after the designated time frame. Here, data may be preserved for the stale words assuming sufficient space exists to do so, but the zero weight prevents the system for using the stale words as candidates. If a user begins to use the word again, the word may be resurrected along with the pre-existing history. Naturally, the amount of available storage space may determine how much typing activity is preserved and when data for stale words is purged.

Once words are ranked and selected using the techniques just described, selected words are utilized to facilitate text entry (Block 708) in various ways. By way of example and not limitation, selected candidate words may be used to modify hit targets on input keys (block 710), perform auto-correction of detected text characters (block 712) and/or output one or more words as predictions for the detected text characters (block 714).

Fig. 8 depicts a procedure 800 in an example implementation in which multi-lingual text prediction candidates are generated in accordance with one or more embodiments. Use of multiple different languages for text input in a particular interaction scenario is recognized (block 802). Multiple dictionaries corresponding to the multiple different languages are activated to employ for text predictions in connection with the interaction scenario (block 804). For example, the text prediction engine 122 may recognize when a user switches between languages or uses a mix of languages in different interactions. When a sufficient number of occurrences multilingual usage are encountered, the text prediction engine 122 may respond by activating dictionaries for the different languages. In one approach, a language specific dictionary for a secondary language may be created as an interaction-specific dictionary 406 as part of an adaptive language model 128. In this case, a user's usage for the secondary language may be reflected in the language specific dictionary. In addition or alternatively, the text prediction engine 122 may locate and install a general population dictionary for the secondary language alongside the existing general population dictionary as part of the adaptive language model 128. The text prediction engine 122 may also suggest installing particular language based upon a user's typing history. Text predictions for multi-lingual interactions may then rely upon the multiple dictionaries for the multiple different languages.

In particular, multi-lingual text predictions are generated for text entry associated with the interaction scenario by combining word probabilities obtained using the multiple dictionaries corresponding to the multiple different languages according to an adaptive language model (block 808). For example, probabilities for two or more individual language specific dictionaries may be combined using the interpolation techniques previously described. Weights for the interpolation may be selected particularly for multi-lingual scenarios. In one approach, the weights may be proportional to the relative usage of different languages by the user. Thus, if usage is split 75/25 for English and Spanish, then the selected weights for interpolating between these languages may reflect these proportions. Alternatively, empirical values for different language combinations may be determined and applied.

In an implementation, each general population language dictionary that is activated may be arranged to employ techniques for adaptive language models herein. Thus, parallel adaptive language models 128 corresponding to the different languages may each have underlying user-specific and interaction-specific dictionaries for respective languages. In order to produce predictions, lists of prediction candidates for input text characters may be generated separately for each language by applying the interpolation techniques described herein to respective adaptive language models. Then, a second interpolation may be employed to combine the individual probabilities from each of the language specific lists into a common list. In this manner, text predictions presented to a user or otherwise used to facilitate text entry may reflect multiple languages by interpolating probabilities (or otherwise combining scoring data) from multiple dictionaries for different languages employed by the user.

Multi-lingual text predictions may be employed in various ways. For example, multi-lingual text predictions for a particular scenario may be offered during text entry via a prediction bar or otherwise in the manner previously described. Language-appropriate candidates or options for different language candidates may also be offered during editing "on-demand." In this case, a user may select a word by touch or other input mechanism to obtain a list of prediction candidates. The list may be formed to include multi-lingual text predictions in scenarios in which multiple language usage is detected.

Additionally, knowledge regarding multi-lingual usage may be employed to selectively determine when to rely upon different language dictionaries and/or whether to use one particular language for predictions or a combination of languages. For example, a user may make a selection to switch from an English keyboard to a French keyboard. In this case, a French dictionary may be set by default. In addition or alternatively, weights between English and French may be adapted accordingly to favor French. On the other hand, when a single keyboard is used for multiple languages (e.g., an English keyboard to type both English and French), the general approach of combining probabilities and/or scoring data from multiple dictionaries described herein may be employed to determine the appropriate language and show language-appropriate candidates. Thus, the system may transition between single dictionary and multiple dictionary usage for predictions depending upon the particular text input scenario.

The type of keyboard used to make text entries may also be stored along with corresponding words. Thus, if a user selects a predicted word, a corresponding keyboard for that word may be automatically displayed to facilitate typing in a corresponding language and language appropriate prediction candidates may be generated accordingly. Again this may involve defaulting to candidates for the particular language of the keyboard or at least weighting predictions more heavily to favor the particular language. Thus, text predictions and/or keyboards may adapt automatically to match a particular multi-lingual usage scenario.

Having described some example techniques related to adaptive language models, consider now an example system that can be utilized in one more implementation described herein.

### Example System and Device

Fig. 9 illustrates an example system 900 that includes an example computing device 902 that is representative of one or more computing systems and/or devices that may implement the various techniques described herein. The computing device 902 may be, for example, a server of a service provider, a device associated with a client (e.g., a client device), an on-chip system, and/or any other suitable computing device or computing system.

The example computing device 902 as illustrated includes a processing system 904, one or more computer-readable media 906, and one or more I/O interfaces 908 that are communicatively coupled, one to another. Although not shown, the computing device 902 may further include a system bus or other data and command transfer system that couples the various components, one to another. A system bus can include any one or combination of different bus structures, such as a memory bus or memory controller, a peripheral bus, a universal serial bus, and/or a processor or local bus that utilizes any of a variety of bus architectures. A variety of other examples are also contemplated, such as control and data lines.

The processing system 904 is representative of functionality to perform one or more operations using hardware. Accordingly, the processing system 904 is illustrated as including hardware elements 910 that may be configured as processors, functional blocks, and so forth. This may include implementation in hardware as an application specific integrated circuit or other logic device formed using one or more semiconductors. The hardware elements 910 are not limited by the materials from which they are formed or the processing mechanisms employed therein. For example, processors may be comprised of semiconductor(s) and/or transistors (e.g., electronic integrated circuits (ICs)). In such a context, processor-executable instructions may be electronically-executable instructions.

The computer-readable media 906 is illustrated as including memory/storage 912. The memory/storage 912 represents memory/storage capacity associated with one or more computer-readable media. The memory/storage 912 may include volatile media (such as random access memory (RAM)) and/or nonvolatile media (such as read only memory (ROM), Flash memory, optical disks, magnetic disks, and so forth). The memory/storage 912 may include fixed media (e.g., RAM, ROM, a fixed hard drive, and so on) as well as removable media (e.g., Flash memory, a removable hard drive, an optical disc, and so forth). The computer-readable media 906 may be configured in a variety of other ways as further described below.

Input/output interface(s) 908 are representative of functionality to allow a user to enter commands and information to computing device 902, and also allow information to be presented to the user and/or other components or devices using various input/output devices. Examples of input devices include a keyboard, a cursor control device (e.g., a mouse), a microphone for voice operations, a scanner, touch functionality (e.g., capacitive or other sensors that are configured to detect physical touch), a camera (e.g., which may employ visible or non-visible wavelengths such as infrared frequencies to detect movement that does not involve touch as gestures), and so forth. Examples of output devices include a display device (e.g., a monitor or projector), speakers, a printer, tactile-response device, and so forth. The computing device 902 may further include various components to enable wired and wireless communications including for example a network interface card for network communication and/or various antennas to support wireless and/or mobile communications. A variety of different types of antennas suitable are contemplated including but not limited to one or more Wi-Fi antennas, general population navigation satellite system (GNSS) or general population positioning system (GPS) antennas, cellular antennas, Near Field Communication (NFC) 214 antennas, Bluetooth antennas, and/or so forth. Thus, the computing device 902 may be configured in a variety of ways as further described below to support user interaction.

Various techniques may be described herein in the general context of software, hardware elements, or program modules. Generally, such modules include routines, programs, objects, elements, components, data structures, and so forth that perform particular tasks or implement particular abstract data types. The terms "module," "functionality," and "component" as used herein generally represent software, firmware, hardware, or a combination thereof. The features of the techniques described herein are platform-independent, meaning that the techniques may be implemented on a variety of commercial computing platforms having a variety of processors.

An implementation of the described modules and techniques may be stored on or transmitted across some form of computer-readable media. The computer-readable media may include a variety of media that may be accessed by the computing device 902. By way of example, and not limitation, computer-readable media may include "computer-readable storage media" and "communication media."

"Computer-readable storage media" refers to media and/or devices that enable storage of information in contrast to mere signal transmission, carrier waves, or signals per se. Thus, computer-readable storage media does not include signal bearing media or signals per se. The computer-readable storage media includes hardware such as volatile and nonvolatile, removable and non-removable media and/or storage devices implemented in a method or technology suitable for storage of information such as computer readable instructions, data structures, program modules, logic elements/circuits, or other data. Examples of computer-readable storage media may include, but are not limited to, RAM, ROM, EEPROM, flash memory or other memory technology, CD-ROM, digital versatile disks (DVD) or other optical storage, hard disks, magnetic cassettes, magnetic tape, magnetic disk storage or other magnetic storage devices, or other storage device, tangible media, or article of manufacture suitable to store the desired information and which may be accessed by a computer.

"Communication media" refers to signal-bearing media configured to transmit instructions to the hardware of the computing device 902, such as via a network. Communication media typically may embody computer readable instructions, data structures, program modules, or other data in a modulated data signal, such as carrier waves, data signals, or other transport mechanism. Communication media also include any information delivery media. The term "modulated data signal" means a signal that has one or more of its characteristics set or changed in such a manner as to encode information in the signal. By way of example, and not limitation, communication media include wired media such as a wired network or direct-wired connection, and wireless media such as acoustic, RF, infrared, and other wireless media.

As previously described, hardware elements 910 and computer-readable media 906 are representative of instructions, modules, programmable device logic and/or fixed device logic implemented in a hardware form that may be employed in some embodiments to implement at least some aspects of the techniques described herein. Hardware elements may include components of an integrated circuit or on-chip system, an application-specific integrated circuit (ASIC), a field-programmable gate array (FPGA), a complex programmable logic device (CPLD), and other implementations in silicon or other hardware devices. In this context, a hardware element may operate as a processing device that performs program tasks defined by instructions, modules, and/or logic embodied by the hardware element as well as a hardware device utilized to store instructions for execution, e.g., the computer-readable storage media described previously.

Combinations of the foregoing may also be employed to implement various techniques and modules described herein. Accordingly, software, hardware, or program modules including text prediction engine 122, adaptive language model 128, and other program modules may be implemented as one or more instructions and/or logic embodied on some form of computer-readable storage media and/or by one or more hardware elements 910. The computing device 902 may be configured to implement particular instructions and/or functions corresponding to the software and/or hardware modules. Accordingly, implementation of modules as a module that is executable by the computing device 902 as software may be achieved at least partially in hardware, e.g., through use of computer-readable storage media and/or hardware elements 910 of the processing system. The instructions and/or functions may be executable/operable by one or more articles of manufacture (for example, one or more computing devices 902 and/or processing systems 904) to implement techniques, modules, and examples described herein.

As further illustrated in Fig. 9, the example system 900 enables ubiquitous environments for a seamless user experience when running applications on a personal computer (PC), a television device, and/or a mobile device. Services and applications run substantially similar in all three environments for a common user experience when transitioning from one device to the next while utilizing an application, playing a video game, watching a video, and so on.

In the example system 900, multiple devices are interconnected through a central computing device. The central computing device may be local to the multiple devices or may be located remotely from the multiple devices. In one exemplary embodiment, the central computing device may be a cloud of one or more server computers that are connected to the multiple devices through a network, the Internet, or other data communication link.

In one exemplary embodiment, this interconnection architecture enables functionality to be delivered across multiple devices to provide a common and seamless experience to a user of the multiple devices. Each of the multiple devices may have different physical requirements and capabilities, and the central computing device uses a platform to enable the delivery of an experience to the device that is both tailored to the device and yet common to all devices. In one exemplary embodiment, a class of target devices is created and experiences are tailored to the generic class of devices. A class of devices may be defined by physical features, types of usage, or other common characteristics of the devices.

In various implementations, the computing device 902 may assume a variety of different configurations, such as for computer 914, mobile 916, and television 918 uses. Each of these configurations includes devices that may have generally different constructs and capabilities, and thus the computing device 902 may be configured according to one or more of the different device classes. For instance, the computing device 902 may be implemented as the computer 914 class of a device that includes a personal computer, desktop computer, a multi-screen computer, laptop computer, netbook, and so on.

The computing device 902 may also be implemented as the mobile 916 class of device that includes mobile devices, such as a mobile phone, portable music player, portable gaming device, a tablet computer, a multi-screen computer, and so on. The computing device 902 may also be implemented as the television 918 class of device that includes devices having or connected to generally larger screens in casual viewing environments. These devices include televisions, set-top boxes, gaming consoles, and so on.

The techniques described herein may be supported by these various configurations of the computing device 902 and are not limited to the specific examples of the techniques described herein. This is illustrated through inclusion of the text prediction engine 122 on the computing device 902. The functionality of the text prediction engine 122 and other modules may also be implemented all or in part through use of a distributed system, such as over a "cloud" 920 via a platform 922 as described below.

The cloud 920 includes and/or is representative of a platform 922 for resources 924. The platform 922 abstracts underlying functionality of hardware (e.g., servers) and software resources of the cloud 920. The resources 924 may include applications and/or data that can be utilized while computer processing is executed on servers that are remote from the computing device 902. Resources 924 can also include services provided over the Internet and/or through a subscriber network, such as a cellular or Wi-Fi network.

The platform 922 may abstract resources and functions to connect the computing device 902 with other computing devices. The platform 922 may also serve to abstract scaling of resources to provide a corresponding level of scale to encountered demand for the resources 924 that are implemented via the platform 922. Accordingly, in an exemplary interconnected device embodiment, implementation of functionality described herein may be distributed throughout the system 900. For example, the functionality may be implemented in part on the computing device 902 as well as via the platform 922 that abstracts the functionality of the cloud 920.

## Conclusion

Although the techniques in the forgoing description has been described in language specific to structural features and/or methodological acts, it is to be understood that the subject matter of the appended claims is not necessarily limited to the specific features or acts described. Rather, the specific features and acts are disclosed as example forms of implementing the claimed subject matter.

**Claims**

1. A method comprising:

   receiving user input of one or more character entries via a keyboard of a computing device;
   recognizing (802) use of multiple different languages for text input based on the character entries into an application of the computing device, the multiple different languages used in a particular interaction scenario, an interaction scenario defined according to usage parameters indicative of characteristics of interaction with the computing device;
   activating (804) multiple dictionaries (402-406) corresponding to the multiple different languages to employ for text predictions in connection with the interaction scenario; and
   generating (808) multi-lingual text predictions for text entry in the application, the text entry associated with the interaction scenario, the text predictions generated by combining probabilities of particular words that appear in the multiple dictionaries (402-406) according to an adaptive language model (128), a probability for each respective text prediction based on a weighted combination of individual probabilities of each respective text prediction from each of the multiple dictionaries corresponding to the multiple different languages in which each respective text prediction appears;
   forming a common list of prediction candidates having a designated number of top ranking words selected from the particular words that appear in the multiple dictionaries according to the combined text prediction probabilities; and
   presenting the top ranking words in the application to the user to facilitate text input for the interaction scenario.

2. A method as recited in claim 1, wherein activating multiple dictionaries (402-406) comprises locating and installing a global dictionary (402) for a secondary language along-side an existing global dictionary for the adaptive language model (128).

3. A method as recited in claim 1, wherein activating multiple dictionaries (402-406) comprises creating a language specific dictionary for a secondary language as part of the adaptive language model (128).

4. A method as recited in claim 1, wherein combining text prediction probabilities obtained using the multiple dictionaries (402-406) comprises interpolating individual word probabilities from the multiple dictionaries (402-406) using interpolation weights for contributions of each of the multiple dictionaries (402-406) that are computed according to an interpolation function; and the interpolation weights being selected for the interpolation are proportional to relative usage of the multiple different languages for the particular interaction scenario.

5. A method as recited in claim 4, wherein the interpolation function is configured to select the weights to be proportional to the relative usage of different languages by the user.

6. A method as recited in claim 4, wherein the interpolation function is configured to vary the weights to increase the contribution of words that are used more recently.

7. A method as recited in claim 1, wherein generating the multi-lingual text predictions comprises:

   generating language specific lists of prediction candidates separately for each of the multiple dictionaries (402-406); and
   interpolating individual probabilities from the language specific lists to form a common list of the multi-lingual text predictions.

8. A computing device (102; 902) comprising:

   a processing system (904); and
   one or more computer-readable media (912) storing instructions that, when executed by the processing system (904), implement a text prediction engine (122) operable to:

   collect data indicative of a user's typing style in multiple different languages for each particular interaction scenario of a plurality of interaction scenarios, each particular interaction scenario defined according to usage parameters indicative of characteristics of interaction with the computing device;
   create a hierarchy of dictionaries (402-406) comprising an interaction-specific dictionary (406) for each particular interaction scenario of the plurality of interaction scenarios, the interaction specific dictionary (406) for each particular interaction scenario containing conditional probabilities for words input by the user using the collected data indicative of the user's typing style;
   detect user input of one or more text character entries via a keyboard of the computing device for a subsequent interaction that matches the particular interaction scenario; and
   interpolate conditional probabilities corresponding to the text characters input during the subsequent interaction to generate one or more predictions for the input text characters, the conditional probabilities based on text predictions from each of the interaction-specific dictionary (406) and at least one other dictionary (402, 404) of the hierarchy of dictionaries (402-406) available to the text prediction engine (122), respectively, to generate one or more word predictions for the input text characters, wherein interpolating conditional probabilities corresponding to text characters during the subsequent interaction from the interaction-specific dictionary (406) and at least one other dictionary (402, 404) further comprises interpolating individual word probabilities corresponding to the text characters from the multiple dictionaries (402-406) using interpolation weights for contributions of each of the multiple dictionaries (402-406) that are computed according to an interpolation function; and the interpolation weights being selected for the interpolation are proportional to relative usage of the multiple different dictionaries (402-406) for the particular interaction scenario.

9. A computing device as recited in claim 8, wherein the interaction-specific dictionary (406) corresponds to interaction via the computing device (102; 902) with at least one of a particular person, application, or location.

10. A computing device as recited in claim 8, wherein the interaction-specific dictionary (406) corresponds to interaction via the computing device (102; 902) with a particular person and a particular application.

11. A computing device as recited in claim 8, wherein the other dictionary (402-404) of the hierarchy of dictionaries (402-406) available to the text prediction engine (122) comprises a global dictionary (402) representative of common usage across a community of users.

12. A computer readable medium (912) comprising computer readable instructions stored thereon which, when executed on a processor (904), causes the processor (904) to perform the method according to any one of claims 1 to 7.

**Patentansprüche**

1. Verfahren, umfassend:

Empfangen einer Nutzereingabe von einer oder mehreren Zeicheneingaben über eine Tastatur einer Rechnereinrichtung;
Erkennen (802) einer Verwendung von mehreren verschiedenen Sprachen für eine Texteingabe, basiert auf der Zeicheneingabe in eine Anwendung der Rechnereinrichtung, wobei die mehreren verschiedenen Sprachen in einem besonderen Interaktionsszenario verwendet werden, wobei ein Interaktionsszenario gemäß von Verwendungsparametern definiert wird, die auf Eigenschaften der Interaktion mit der Rechnereinrichtung hinweisen;
Aktivieren (804) mehrerer Wörterbücher (402-406), welche zu den mehreren verschiedenen Sprachen korrespondieren, um sie für Textvorhersagen in Verbindung mit dem Interaktionsszenario einzusetzen; und
Erzeugen (808) mehrsprachiger Textvorhersagen für Texteingaben in der Anwendung, wobei die Texteingaben mit dem Interaktionsszenario assoziiert ist, wobei die Textvoraussagen durch eine Kombination von Wahrscheinlichkeiten spezieller Worte erzeugt werden, welche in den mehreren Wörterbüchern (402-406) gemäß einem adaptiven Sprachmodel (128) erscheinen, wobei eine Wahrscheinlichkeit für jede jeweilige Textvorhersage auf einer gewichteten Kombination individueller Wahrscheinlichkeiten jeder jeweilige Textvorhersage von jedem der mehreren Wörterbücher basiert ist, welche zu den mehreren verschiedenen Sprachen korrespondieren, in welchen jede jeweilige Textvorhersage auftritt;
Bilden einer gemeinsamen Liste von Vorhersagekandidaten, welche eine vorgesehene Anzahl von Wörtern führender Position aufweisen, welche von den speziellen Worten ausgewählt sind, die in den mehreren Wörterbüchern gemäß der kombinierten Textvorhersagewahrscheinlichkeit auftreten; und
Vorstellen der Wörter führender Position in der Anwendung dem Nutzer, um die Texteingabe für das Interaktionsszenario zu erleichtern.

2. Verfahren, wie in Anspruch 1 vorgetragen, wobei Aktivieren mehrerer Wörterbücher (402-406) Lokalisieren und Installieren eines globalen Wörterbuchs (402) für eine Sekundärsprache neben einem existierenden globalen Wörterbuch für das adaptive Sprachmodel (128) umfasst.

3. Verfahren, wie in Anspruch 1 vorgetragen, wobei Aktivieren mehrerer Wörterbücher (402-406) Erzeugen eines Sprachen spezifischen Wörterbuchs für eine Sekundärsprache als Teil des adaptiven Sprachmodels (128) umfasst.

4. Verfahren, wie in Anspruch 1 vorgetragen, wobei Kombinieren von Textvorhersagewahrscheinlichkeiten, welche unter Verwendung der mehreren Wörterbücher (402-406) erhalten werden, Interpolieren von individuellen Wortwahrscheinlichkeiten von den mehreren Wörterbüchern (402-406) unter Verwendung von Interpolationsgewichten für die Beiträge jedes der mehreren Wörterbücher (402-406) umfasst, welche gemäß einer Interpolationsfunktion berechnet worden sind; und die Interpolationsgewichte, welche für die Interpolation ausgewählt sind, zu einer relativen Verwendung der mehreren verschiedenen Sprachen für das spezielle Interaktionsszenario proportional sind.

5. Verfahren, wie in Anspruch 4 vorgetragen, wobei die Interpolationsfunktion ausgelegt ist, die Gewichte auszuwählen, welche zur relativen Verwendung verschiedenen Sprachen durch den Nutzer proportional ist.

6. Verfahren, wie in Anspruch 4 vorgetragen, wobei die Interpolationsfunktion ausgelegt ist, um die Gewichte zu variieren, um den Beitrag von Wörtern, die in letzter Zeit verwendet worden sind, zu erhöhen.

7. Verfahren, wie in Anspruch 1 vorgetragen, wobei das Erzeugen mehrsprachiger Textvorhersagen umfasst:

   Getrenntes Erzeugen sprachspezifischer Listen von Vorhersagekandidaten für jedes der mehreren Wörterbücher (402-406); und Interpolieren individueller Vorhersagen von den sprachspezifischen Listen, um eine gemeinsame Liste der mehrsprachigen Textvorhersagen zu bilden.

8. Rechnereinrichtung (102; 902), umfassend:

   ein Verarbeitungssystem (904); und ein oder mehrere Computer-lesbare Medien (912), welche Daten speichern, die, wenn sie durch das Verarbeitungssystem (904) ausgeführt werden, eine Textvorhersagemaschine (122) implementieren, funktionsfähig um:

      Daten zu sammeln, welche auf einen Schreibstiel den Nutzers in mehreren verschiedenen Sprachen für jedes spezielle Interaktionsszenario einer Vielzahl von Interaktionsszenarios hinweisen, wobei jedes spezielle Interaktionsszenario gemäß der Verwendungsparameter definiert ist, welche auf die Eigenschaften der Interaktion mit der Rechnereinrichtung hinweisen; eine Hierarchie von Wörterbüchern (402-406) zu erzeugen, umfassend ein Interaktions-spezifisches Wörterbuch (406) für jedes spezielles Interaktionsszenario der Vielzahl von Interaktionsszenarios, wobei das Interaktions-spezifische Wörterbuch (406) für jedes spezifische Interaktionsszenario, welches eine bedingte Wahrscheinlichkeit für durch den Nutzer eingegebene Wörter unter Verwendung der gesammelten Daten enthält, welche auf den Schreibstil des Nutzers hinweisen; eine Nutzereingabe von einer oder mehreren Textzeicheneingaben über eine Tastatur der Rechnereinrichtung für eine nachfolgende Interaktion zu erkennen, die zu dem speziellen Interaktionsszenario passt; und bedingte Wahrscheinlichkeiten zu interpolieren, welche zu den während einer nachfolgenden Interaktion eingegebener Textzeichen korrespondieren, um eine oder mehrere Vorhersagen für die Eingabe der Textzeichen zu erzeugen, wobei die bedingten Wahrscheinlichkeiten auf den Textvorhersagen von jedem der interaktionsspezifischen Wörterbücher (406) und dem zumindest einem weiteren Wörterbuch (402, 404) der Hierarchie der Wörterbücher (402-406), verfügbar jeweils auf der Textvorhersagemaschine (122), basieren, um ein oder mehrere Wortvorhersagen für die eingegebenen Textzeichen zu erzeugen, wobei Interpolieren bedingter Wahrscheinlichkeiten korrespondierend zu Textzeichen während nachfolgender Interaktionen von dem interaktions-spezifischen Wörterbuch (406) und zumindest einem anderen Wörterbuch (402, 404) weiterhin umfasst, Interpolieren individueller Wortwahrscheinlichkeiten, welche zu den Textzeichen von den mehreren Wörterbüchern (402- 406) unter Verwendung von Interpolationsgewichten für die Beiträge jedes der mehreren Wörterbücher (402-406) korrespondieren, die gemäß einer Interpolationsfunktion berechnet sind; und wobei die Interpolationsgewichte, welche für die Interpolation ausgewählt sind, relativ zur Verwendung der mehreren verschiedenen Wörterbücher (402-406) für das spezielle Interaktionsszenario proportional sind.

9. Rechnereinrichtung, wie in Anspruch 8 vorgetragen, wobei das interaktionsspezifische Wörterbuch (406) zur Interaktion über die Rechnereinrichtung (102; 902) mit zumindest einem von einer speziellen Person, einer Anwendung oder einem Ort korrespondiert.

10. Rechnereinrichtung, wie in Anspruch 8 vorgetragen, wobei das interaktionsspezifische Wörterbuch (406) zur Interaktion über die Rechnereinrichtung (102; 902) mit einer speziellen Person oder einer speziellen Anwendung korrespondiert.

**11.** Rechnereinrichtung, wie in Anspruch 8 vorgetragen, wobei das andere Wörterbuch (402-404) der Hierarchie der Wörterbücher (402-406), welche der Textvorhersagemaschine (122) zur Verfügung stehen, ein globales Wörterbuch (402) umfasst, welches repräsentativ für eine gemeinsame Verwendung über eine Gemeinschaft von Nutzern ist.

**12.** Computer-lesbares Medium (912), umfassend darauf gespeicherte Computerlesbare Anweisungen, welche, wenn sie auf einem Prozessor (904) ausgeführt werden, verursachen, dass der Prozessor (904) ein Verfahren nach einem der Ansprüche 1 bis 7 ausführt.

**Revendications**

**1.** Procédé, comprenant les étapes consistant à :

- recevoir une entrée d'utilisateur constituée d'une ou plusieurs entrées de caractère via un clavier d'un dispositif informatique ;
- reconnaître (802) l'utilisation de plusieurs langues différentes pour une entrée de texte sur la base des entrées de caractère dans une application du dispositif informatique, les plusieurs langues différentes utilisées dans un scénario d'interaction particulier, un scénario d'interaction défini selon des paramètres d'utilisation indicatifs de caractéristiques d'interaction avec le dispositif informatique ;
- activer (804) plusieurs dictionnaires (402-406) correspondant aux plusieurs langues différentes à utiliser pour des prédictions de texte en relation avec le scénario d'interaction ; et
- générer (808) des prédictions de texte multilingue pour une entrée de texte dans l'application, l'entrée de texte associée au scénario d'interaction, les prédictions de texte générées en combinant des probabilités de mots particuliers qui apparaissent dans les plusieurs dictionnaires (402-406) selon un modèle linguistique adaptatif (128), une probabilité pour chaque prédiction de texte respective sur la base d'une combinaison pondérée de probabilités individuelles de chaque prédiction de texte respective à partir de chacun des plusieurs dictionnaires correspondant aux plusieurs langues différentes dans lesquelles chaque prédiction de texte respective apparaît ;
- former une liste commune de candidats de prédiction ayant un nombre désigné de mots en tête de classement sélectionnés à partir des mots particuliers qui apparaissent dans les plusieurs dictionnaires selon les probabilités combinées de prédiction de texte ; et
- présenter les mots en tête de classement dans l'application à l'utilisateur pour faciliter une entrée de texte pour le scénario d'interaction.

**2.** Procédé selon la revendication 1, dans lequel l'activation de plusieurs dictionnaires (402-406) comprend la localisation et l'installation d'un dictionnaire global (402) pour une langue secondaire à côté d'un dictionnaire global existant pour le modèle linguistique adaptatif (128).

**3.** Procédé selon la revendication 1, dans lequel l'activation de plusieurs dictionnaires (402-406) comprend la création d'un dictionnaire spécifique à une langue pour une langue secondaire en tant que partie du modèle linguistique adaptatif (128).

**4.** Procédé selon la revendication, 1, dans lequel la combinaison de probabilités de prédiction de texte obtenues en utilisant les plusieurs dictionnaires (402-406) comprend l'interpolation de probabilités de mot individuelles à partir des plusieurs dictionnaires (402-406) en utilisant des poids d'interpolation pour des contributions de chacun des plusieurs dictionnaires (402-406) qui sont calculés selon une fonction d'interpolation ; et les poids d'interpolation sélectionnés pour l'interpolation sont proportionnels à une utilisation relative des plusieurs langues différentes pour le scénario d'interaction particulier.

**5.** Procédé selon la revendication 4, dans lequel la fonction d'interpolation est configurée pour sélectionner les poids pour qu'ils soient proportionnels à l'utilisation relative des différentes langues par l'utilisateur.

**6.** Procédé selon la revendication 4, dans lequel la fonction d'interpolation est configurée pour faire varier les poids pour augmenter la contribution de mots qui ont été utilisés plus récemment.

**7.** Procédé selon la revendication 1, dans lequel la génération des prédictions de texte multilingue comprend les étapes consistant à :

- générer des listes spécifiques à une langue de candidats de prédiction séparément pour chacun des plusieurs dictionnaires (402-406) ; et
- interpoler des probabilités individuelles à partir des listes spécifiques à une langue pour former une liste commune de prédictions de texte multilingue.

**8.** Dispositif informatique (102 ; 902) comprenant :

- un système de traitement (904) ; et
- un ou plusieurs supports lisibles par ordinateur (912) stockant des instructions qui, lorsqu'elles sont exécutées par le système de traitement (904), mettent en oeuvre un moteur de prédiction de texte (122) pouvant fonctionner pour :

- recueillir des données indicatives du style de frappe d'un utilisateur dans plusieurs langues différentes pour chaque scénario d'interaction particulier d'une pluralité de scénarios d'interaction, chaque scénario d'interaction particulier étant défini selon des paramètres d'utilisation indicatifs de caractéristiques d'interaction avec le dispositif informatique ;

- créer une hiérarchie de dictionnaires (402-406) comprenant un dictionnaire spécifique à une interaction (406) pour chaque scénario d'interaction particulier de la pluralité de scénarios d'interaction, le dictionnaire spécifique à une interaction (406) pour chaque scénario d'interaction particulier contenant des probabilités conditionnelles pour des mots entrés par l'utilisateur utilisant les données recueillies indicatives du style de frappe de l'utilisateur ;

- détecter une entrée d'utilisateur constituée d'une ou de plusieurs entrées de caractère de texte via un clavier du dispositif informatique pour une interaction ultérieure qui correspond au scénario d'interaction particulier ; et

- interpoler des probabilités conditionnelles correspondant aux caractères de texte entrés pendant l'interaction ultérieure pour générer une ou plusieurs prédictions pour des caractères de texte entrés, les probabilités conditionnelles sur la base de prédictions de texte à partir de chacun des dictionnaires spécifiques à une interaction (406) et d'au moins un autre dictionnaire (402, 404) de la hiérarchie de dictionnaires (402-406) disponibles pour le moteur de prédiction de texte (122), respectivement, pour générer une ou plusieurs prédictions de mot pour les caractères de texte entrés, dans lequel une interpolation de probabilités conditionnelles correspondant à des caractères de texte lors de l'interaction ultérieure à partir du dictionnaire spécifique à une interaction (406) et d'au moins un autre dictionnaire (402, 404) comprend en outre l'interpolation de probabilités de mot individuelles correspondant aux caractères de texte à partir des plusieurs dictionnaires (402-406) en utilisant des poids d'interpolation pour des contributions de chacun des plusieurs dictionnaires (402-406) qui sont calculés en fonction d'une fonction d'interpolation ; et les poids d'interpolation sélectionnés pour l'interpolation sont proportionnels à une utilisation relative des plusieurs dictionnaires différents (402-406) pour le scénario d'interaction particulier.

9. Dispositif informatique selon la revendication 8, dans lequel le dictionnaire spécifique à une interaction (406) correspond à une interaction par l'intermédiaire du dispositif informatique (102 ; 902) avec au moins un d'une personne particulière, d'une application ou d'un emplacement.

10. Dispositif informatique selon la revendication 8, dans lequel le dictionnaire spécifique à une interaction (406) correspond à une interaction par l'intermédiaire du dispositif informatique (102 ; 902) avec une personne particulière et une application particulière.

11. Dispositif informatique selon la revendication 8, dans lequel l'autre dictionnaire (402-404) de la hiérarchie de dictionnaires (402-406) à la disposition du moteur de prédiction de texte (122) comprend un dictionnaire global (402) représentatif d'une utilisation commune à travers une communauté d'utilisateurs.

12. Support lisible par ordinateur (912) comprenant des instructions lisibles par ordinateur stockées sur celui-ci qui, lorsqu'elles sont exécutées sur un processeur (904), amène le processeur (904) à exécuter le procédé selon l'une quelconque des revendications 1 à 7.

100

112

114

Computing Device
102

Keyboard Input
Module 120

Text Prediction
Engine 122

Character
Entries 124

Adaptive
Language Model
128

Input
Module 116

Input Sensor
Data 118

UI
126

12:15

Go H|

Search Provider          Spokane

124

Home  Hokies  Hotel  Hawaii  Huskies

q  w  e  r  t  y  u  i  o  p

a  s  d  f  g  h  j  k  l

⇧  z  x  c  v  b  n  m  ⌫

&123  ,  space  .

104

110

106

108

**Fig. 1**

**Fig. 2**

**Fig. 3**

300

EP 2 972 691 B1

400

Text Prediction Engine
122

Adaptive Language Model
128

General Population
Dictionary 402

Personalized
Dictionary 404

Interaction-Specific
Dictionaries 406

**Fig. 4A**

408

General Population
Dictionary 402

Personalized
Dictionary 404

Interaction-
Specific
Dictionaries
406

Mom

Spouse

Sports
App

Home

Message
App

Work

Productivity
App

browser

mail
provider.com

photos

Computing
Device 102

**Fig. 4B**

500

**502**
Detect entry of text characters
during interaction with a device

**504**
Generate one or more text prediction candidates
corresponding to the detected text characters according
to an adaptive language model

**506**
Employ the one or more text prediction
candidates to facilitate further text entry for
the interaction with the device

# Fig. 5

600

602
Identify an interaction-specific dictionary
associated with text input for
an interaction scenario with a device

604
Compute one or more text predictions for the interaction
scenario using word probabilities from the interaction-specific
dictionary as a component of probabilities assigned by an
adaptive language model to determine the one or more text
predictions

**Fig. 6**

<u>700</u>

<u>702</u>
Identify multiple dictionaries to use as sources of words for prediction
of text based on one or more detected text characters

<u>704</u>
Rank words one to another as prediction candidates for the detected
text characters using a weighted combination of scoring data
associated with words contained in the multiple dictionaries

<u>706</u>
Select one or more top ranking words
according to the ranking as prediction
candidates for the detected text characters

<u>708</u>
Utilize selected words to facilitate text entry

<u>710</u>
Modify hit targets of input keys

<u>712</u>
Perform auto-correction of
the detected text characters

<u>714</u>
Output one or more words as predictions for the detected
text characters

## Fig. 7

800

**802**
Recognize use of multiple different languages for text input in a particular interaction scenario

**804**
Activate multiple dictionaries corresponding to the multiple different languages to employ for text predictions in connection with the interaction scenario

**808**
Generate multi-lingual text predictions for text entry associated with the interaction scenario by combining word probabilities obtained using the multiple dictionaries according to an adaptive language model

**Fig. 8**

900

Platform 922

Resources 924

Cloud
920

Computing Device 902

Processing
System 904

Computer-
readable Media
906

Hardware
Elements 910

Memory/
Storage 912

I/O
Interfaces 908

Text Prediction
Engine 122

Computer
914

Mobile
916

Television
918

Folder

**Fig. 9**

**EP 2 972 691 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012090027 A1

- WO 2012042217 A1